# EUROPÄISCHE PATENTSCHRIFT

(11) **EP 1 920 512 B1**
(45) Veröffentlichungstag und Bekanntmachung des Hinweises auf die Patenterteilung: **22.01.2014**
(21) Anmeldenummer: 06762855.2
(22) Anmeldetag: 27.07.2006
(51) Int. Cl.: H02B 1/052

(54) **ELEKTRISCHES SCHALTGERÄT**
ELECTRIC SWITCH DEVICE
COMMUTATEUR ELECTRIQUE

(30) Priorität: 17.08.2005 DE 102005038776; 05.07.2006 DE 102006030953
(43) Veröffentlichungstag der Anmeldung: 14.05.2008
(73) Patentinhaber: ABB AG, 68309 Mannheim (DE)
(72) Erfinder: WEBER, Ralf, 69123 Heidelberg (DE); EPPE, Klaus-Peter, 69429 Waldbrunn (DE)
(86) Internationale Anmeldenummer: PCT/EP2006/007429
(87) Internationale Veröffentlichungsnummer: WO 2007/019952

(56) Entgegenhaltungen:
- EP-A1- 0 602 305
- DE-A1- 10 349 660
- DE-U1-202004 019 381

## Beschreibung

Die Erfindung betrifft ein elektrisches Schaltgerät, insbesondere einen Leitungs- Fehlerstrom- oder Motorschutzschalter mit einer Schnellbefestigungsvorrichtung gemäß dem Oberbegriff des Anspruches 1.

Derartige elektrische Schaltgeräte werden in eine elektrische Installationsverteilung eingebaut, indem sie auf einer Normprofiltragschiene, insbesondere auf eine Hutprofiltragschiene aufgeschnappt werden. Eine derartige Hutprofiltragschiene besitzt eine U-form, wobei an den freien Enden der Schenkel in entgegengesetzte Richtungen vorspringende Fleische angeformt sind, deren freie Kanten als Befestigungskanten für eine elektrische Einrichtung dienen.

Zur Vereinfachung soll hier lediglich beispielhaft ein Leitungsschutzschalter betrachtet werden.

Ein solcher Leitungsschutzschalter besitzt ein Gehäuse aus einem Isolierstoff mit Frontseiten und Schmalseiten und einer Befestigungsseite, in der eine Ausnehmung eingebracht ist, deren Begrenzungswände senkrecht zur Befestigungsseite verlaufen. Eine Begrenzungswand ist mit einem nasenartigen Vorsprung versehen, der zur gegenüberliegenden Begrenzungswand hin vorspringt, am Leitungsschutzschalter angeformt ist und eine feststehende Rastnase bildet.

Die Auswahl des Isolierstoffmaterials für das Gehäuse geschieht meistens danach, dass das Gehäuse eine gute elektrische Isolationsfähigkeit bei gleichzeitig hoher mechanischer Härte haben soll.

An der gegenüberliegenden Begrenzungswand ist eine sogenannte bewegliche Nase angeordnet, die federnd nach innen in die Ausnehmung, das heißt in Richtung auf die gegenüberliegende feststehende Nase gedrückt ist.

Die Hutprofiltragschiene ist in der Installationsverteilung horizontal eingebaut, wobei die freien Schenkel der Hutprofiltragschiene vertikal ausgerichtet sind. Zur Montage wird daher der Leitungsschutzschalter mit seiner feststehende Nase auf die oben liegende Längskante so aufgehängt, dass die feststehende Nase hinter diese Kante greift. Durch Verschwenken des Leitungsschutzschalters gegen die Hutprofiltragschiene um die Aufhängerstelle gelangt die bewegliche Nase gegen die untere Kante der Hutprofiltragschiene und bei weiterem hinein Drücken es rastet die bewegliche Nase hinter dieser untere Kante ein.

Im allgemeinen ist die bewegliche Nase an einem an der Befestigungsseite verschieblich geführten Schieber angeformt, der mittels beispielsweise einer Schraubendruckfeder nach innen in die Ausnehmung gegen einen Anschlag gedrückt ist. Zur Demontage wird der Schieber mittels eines Werkzeuges, beispielsweise eines Schraubendrehers, von der Hutprofiltragschiene weg bewegt, so dass die bewegbare oder bewegliche Nase von der Hutprofiltragschiene freikommt. Durch Verschwenken des Leitungsschutzschalters in eine der Montierbewegung entgegengesetzte Richtung kann der Leitungsschutzschalter von der Hutprofiltragschiene entfernt werden.

Die Schnellbefestigung besteht also normalerweise aus wenigstens zwei Teilen, nämlich einem Schieber und einer Duckfehler, die den Schieber nach innen gegen die Hutprofiltragschiene drückt. Dies bedeutet eine erhöhte Lagerhaltung und auch einen erhöhten Montageaufwand.

Aus der EP 0 602 305 A 1 ist ein elektrisches Schaltgerät mit einer Schnellbefestigung bekannt, bei dem an einem senkrecht zur Längserstreckung der Hutprofiltragschiene angeordneten Schieber eine Rastnase angeformt ist. Diese Schieber ist mit dem Gehäuse über einen so genannten Biegesteg verbunden, so dass der Schieber um eine Achse, die parallel zur Längserstreckung der Hutprofiltragschiene verläuft und durch eine Wandstärkenschwächung gebildet ist, abklappbar ist. Der Schieber benötigt aus diesem Grunde eine besondere zusätzliche Führungsanordnung, damit der Schieber federnd gegen die benachbarte freie Längskante der Hutprofiltragschiene angedrückt werden kann und sich dabei senkrecht zur Längserstreckung der Hutprofiltragschiene bewegt.

Aufgabe der Erfindung ist es, ein elektrisches Schaltgerät mit einer Schnellbefestigung zu schaffen, bei der eine zusätzliche Führung des Schiebers vermieden ist und ohne zusätzliche Bauteile eine handhabbare Ver- und Entrastung der beweglichen Nase unabhängig von der Materialwahl für das Gehäuse sichergestellt ist, so dass das Schaltgerät mit der Schnellbefestigung daher einfach und kostengünstig zu fertigen ist.

Diese Aufgabe wird erfindungsgemäß durch die Merkmale des Anspruchs 1 gelöst.

Erfindungsgemäß umfasst die Schnellbefestigungsvorrichtung also wenigstens eine bewegliche Nase, die mittels wenigstens eines einstückig an das Schaltgerätegehäuse angeformten Verbindungsteils der Befestigungsfläche des Schaltgerätegehäuses zugeordnet ist und die im auf der Hutprofiltragschiene aufgeschnappten Zustand hinter eine Längskante der Hutprofiltragschiene greift, wobei das Verbindungsteil federelastisch ist und aus einem Material besteht, das andere mechanischen Eigenschaften als das Gehäusematerial aufweist.

Insbesondere ist dabei das Verbindungsteil ein federelastischer Steg, der aus einem Material besteht, das andere federelastische Eigenschaften aufweist als das Gehäusematerial, so dass unabhängig von den federelastischen Eigenschaften des Gehäusematerials eine federnde Verrastung des Schaltgerätes auf der Hutprofiltragschiene ermöglicht ist.

Gemäß einer vorteilhaften Ausführungsform der Erfindung ist die bewegbare Nase an einem Schieber angeformt, welcher mittels des einstückig an das Schaltgerätegehäuse angeformten, wenigstens einen federelastischen Stegs geführt ist.

Durch die Führung des Schiebers mittels des federelastischen Stegs entfällt die Notwendigkeit, ein separates Führungsteil vorzusehen, so dass der Aufbau sehr einfach wird. Das Gehäuse und die Schnellbefestigungsvorrichtung können einstückig hergestellt werden. Es entfällt die Notwendigkeit, weitere Teile wie beispielsweise eine zusätzliche Druckfeder zu montieren.

Dadurch, dass das Verbindungsteil aus einem Material mit anderen mechanischen Eigenschaften als das Gehäusematerial besteht, können dessen federelastische Eigenschaften unabhängig von denen des Gehäuses festgelegt und für den Verwendungszweck optimiert werden. Dies ist insbesondere dann vorteilhaft, wenn das Material, aus dem das Gehäuse aufgebaut ist, ungünstige Federeigenschaften aufweist.

Dies kann dann der Fall sein, wenn das Gehäusematerial beispielsweise ein glasfaserverstärktes Kunststoffmaterial ist. Dieses ist zwar sehr robust und weist gute elektrische Isolationseigenschaften auf, es kann dabei aber relativ steif und unelastisch sein. In der Folge wäre der Steg, wenn er an einem Verbindungsteil aus diesem Material angeformt wäre, bei der Demontage des Schaltgerätes von der Hutprofiltragschiene nur sehr schwer entrastbar. Damit der Steg dennoch ohne unverhältnismäßig großen Kraftaufwand in die Entrastungsstellung gebracht werden kann, müsste das Verbindungsteil entsprechend dünn ausgeführt werden. Dann besteht aber wiederum die Gefahr, dass es leicht bricht.

Bei einem erfindungsgemäßen Schaltgerät hat das an das Gehäuse einstückig angeformte Verbindungsteil eine höhere Federelastizität als das Gehäuse. Es kann dann so dimensioniert werden, dass es eine ausreichende Dicke aufweist und dennoch mit akzeptablen Kraftaufwand verbogen werden kann, so dass der Steg einfach ver- und entrastet werden kann, obwohl das Gehäuse ansonsten unelastisch ist.

In vorteilhafter Weise sind das Schaltgerätegehäuse und die Schnellbefestigungsvorrichtung in einem Zweikomponenten-Spritzgußverfahren hergestellt. Ein Zweikomponenten-Spritzgußverfahren bietet die Möglichkeit, in einer Verfahrensabfolge hintereinander mehrere Spritzgußteile aus verschiedenen Materialien einstückig miteinander zu verbinden. Somit ist es auf einfache und kostengünstige Art und Weise möglich, Kunststoffteile bestehend aus Kunststoffen mit unterschiedlichen mechanischen Eigenschafteri einstückig so miteinander zu verbinden, dass jedes Kunststoffteil die seinem Verwendungszweck angepassten optimalen mechanischen Eigenschaften hat.

Die mechanischen Eigenschaften, in denen sich das Gehäuse und die daran einstückig angeformte Befestigungsvorrichtung unterscheiden, sind insbesondere der Elastizitätsmodul und die Zähigkeit beziehungsweise Sprödigkeit, sowie auch die Härte.

Eine weitere sehr vorteilhafte Ausführungsform der Erfindung sieht vor, dass der Befestigungsfläche zwei sich gegenüberliegende bewegbare Nasen mittels einstückig an das Schaltgerätegehäuse angeformter, federeleastischer Stege zugeordnet sind. Dabei können die bewegbaren Nasen an je einem Schieber angeformt sein, welche mittels der einstückig an das Schaltgerätegehäuse angeformten, federelastischen Stege geführt sind.

Der Vorteil dieser Ausführungsform liegt darin, dass bei einem in solcher Art gestalteten elektrischen Schaltgerät die Montageeinrichtung unabhängig von der Einbaulage der Einrichtung ist.

Weitere vorteilhafte Ausgestaltungen der Erfindung sind den Unteransprüchen zu entnehmen.

Anhand der Zeichnung, in der ein Ausführungsbeispiel der Erfindung dargestellt ist, sollen die Erfindung sowie weitere vorteilhafte Ausgestaltungen und Verbesserungen sowie weitere Vorteile näher erläutert und beschrieben werden.

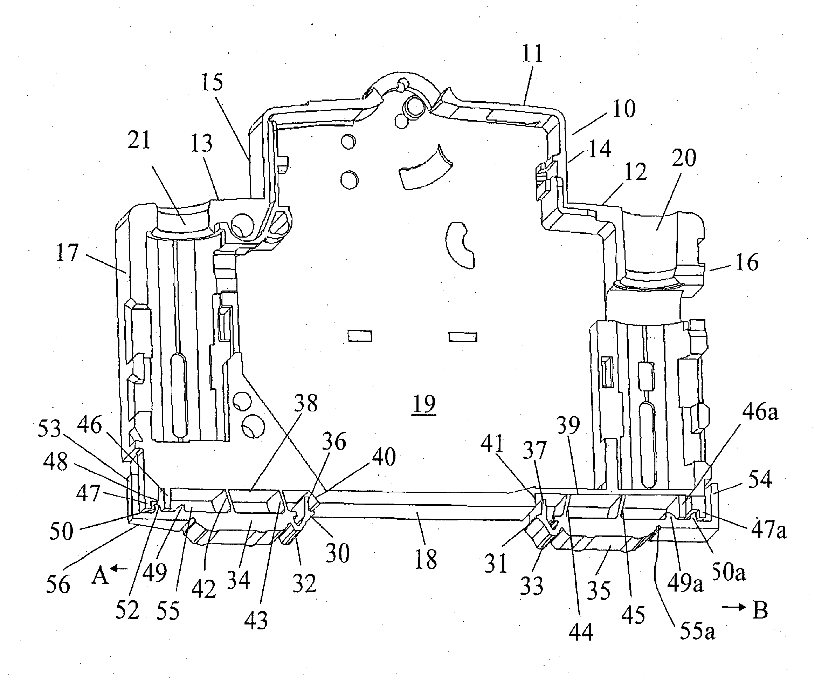

Es zeigt
- Figur 1: eine Einsicht in eine Schalenhälfte eines erfindungsgemäßen Leitungsschutzschalters, ohne Einbauten.

Ein elektrischer Leitungsschutzschalter, anhand dessen die Erfindung näher erläutert wird, besitzt ein Gehäuse aus Kunststoff, welches aus zwei halbschalenförmigen Gehäuseteilen, die mit ihren freien Kanten gegeneinander gelegt sind, oder aus einer Gehäusehalbschale aufgebaut sind, die mittels eines Begriffs verschlossen wird.

Innerhalb des Gehäuses eines Leitungsschutzschalters befinden sich eine Kontaktstelle, ein Schaltschloss, ein elektromagnetischer oder ein thermischer Auslöser, eine Lichtbogenlöscheinrichtung sowie Anschlussklemmen. Diese sind in der Figur 1 nicht dargestellt, da allgemein üblich.

Das in der Figur 1 dargestellte Gehäuseunterteil 10, welches ein halbschalenförmiges Gehäuseunterteil ist, besitzt eine vordere Frontfläche 11 und zwei in Abstand dazu angeordnete hintere Frontflächen 12 und 13, sowie zwei vordere Seitenwände 14,15, welche etwa senkrecht zu der vorderen Frontflächen 11 und den hinteren Frontflächen 12,13 ausgerichtet sind und beide miteinander verbinden. An die hinteren Frontflächen 12 und 13 schließen sich hintere Seitenflächen 16 und 17 an, die in eine Befestigungsseite 18 übergehen, die etwa parallel zu der vorderen Frontfläche und den hinteren Frontflächen 11, 12,13 und senkrecht zu den vorderen Seitenflächen 14, 15 beziehungsweise den hinteren Seitenflächen 16,17 ausgerichtet ist.

Der Leitungsschutzschalter ist insoweit in der sogenannten Sockelbauweise geformt. Das Gehäuseunterteil 10 besitzt eine Gehäusebreitseite 19, so dass mit der Breitseite oder Breitseitenwand 19 und den vorderen und hinteren Front- und Seitenwänden sowie mit der Befestigungswand an der Befestigungsseite 18 eine Schalenform gebildet ist. Lediglich ergänzend sei angeführt, dass im Bereich der hinteren Front-und Seitenwände 16,17 Ausnehmungen 20,21 für Anschlussklemmen vorgesehen sind.

Nun soll die Ausführung der Befestigungsfläche bei 18 beschrieben werden. Hier sind zwei bewegbare Nasen 30 und 31 vorgesehen, die über eine V-Form 32,33, deren offene Seite zur Befestigungsfläche 18 hinweist, mit einem Schieber 34,35 verbunden sind.

Die Schieber 34,35 verlaufen mit ihrer Längserstreckung parallel zur Boden- oder Befestigungswand 18 und an ihren inneren Enden, das heißt an ihren gegenüberliegenden Enden, schließen die V-Formen 32,33 an, wobei die Länge der freien Schenkel 36,37, an denen die Nasen 30,31 angeformt sind, länger ist als die Dicke der Schieber 34,35, gemessen senkrecht zur Befestigungsebene beziehungsweise -wand 18. In der Befestigungswand 18, auf der Befestigungsseite, also außerhalb des Gehäuses 10, sind beidseitig Rücksprünge 38 und 39 vorgesehen, die nach innen hin, also zur Mitte der Befestigungsseite oder -wand 18 durch eine Abschlusswand 40,41 begrenzt sind, wobei die Abschlusswand 40 einen schrägen Winkel zur Befestigungswand 18 bildet beziehungsweise mit dieser einen stumpfen Winkel einschließt, der zum Gehäuseinneren offen ist.

Die Befestigung der Schieber 34 und 35 in den Rücksprüngen 38 und 39 erfolgt mittels je zweier Stege 42,43; 44,45, die in der in der Figur 1 gezeichneten Stellung mit der Innenfläche der Rücksprünge 38 jeweils einen spitzen Winkel α bilden, deren zu der jeweiligen Nase 30 beziehungsweise 31 geöffnet ist.

Die Stege 42,43; 44,45 sind einstückig an die Gehäuseschale 10 angeformt. Sie bestehen aus einem Material mit anderen mechanischen Eigenschaften als der Rest des Gehäuses. Das Material, aus dem die Stege 42,43; 44,45 bestehen, weist einen niedrigeren Elastizitätsmodul auf als das Material, aus dem der Rest des Gehäuses besteht. Somit haben die Stege eine hinreichend große Dicke, so dass sie stabil angeformt sind und nicht leicht abgerissen werden können, und dennoch eine ausreichende Federelastizität aufweisen, so dass die Schieber 34,35 aus der gezeichneten Stellung in eine Stellungen verbracht werden können, in der die Winkel α stumpf sind, und zwar ohne das eine unverhältnismäßig große Kraft aufgewendet werden müsste. Damit können die Schieber 34,35 in Pfeilrichtung A beziehungsweise B nach außen gedrückt werden wobei sich die Stege in 42,43; 44,45 elastisch verformen.

Es wird ein 2-Komponenten-Spritzverfahren angewendet, um zunächst die Gehäuseschalen, und anschließend einstückig daran die Stege 42,43; 44,45 und gegebenenfalls auch die Schieber 34,35 mit den bewegbaren Nasen 30,31 aus einem Material mit anderen mechanischen Eigenschaften als das Gehäusematerial anzuformen.

In den Vertiefungen 38,39 sind im Bereich der hinteren Seitenwände 16,17 senkrecht zu den Vertiefungen verlaufende Leisten 46,47 angeformt, die einen Zwischenraum 48 zwischen sich bilden. Die gleichen Leisten befinden sich auch auf der anderen Seite. Auf der der Vertiefung 38 zugewandten Seite besitzt der Schieber Rastnasen 49 und 50, die eine Sägezahnform aufweisen, wobei bei der der Nase 30 näher gelegenen Rastnase 49 die Schrägfläche 51 zu der von der Nase 30 entgegengesetzten Seite und die Schrägfläche 52 an der Rastnase 50 in Richtung zur Nase 30 hin gelegen ist. In der in der Figur 1 dargestellten Lage greift die äußere Nase 50 in den Zwischenraum 48 hinein und die inneren Nase 49 befindet sich auf der Seite der Leiste 46, die zur Nase 30 hin gelegen ist.

Wenn eine Kraft auf den Schieber 34 beispielsweise in Pfeilrichtung A ausgeübt wird, dann gelangt die Rastnase 50 gegen die Leiste 47, so dass die Bewegung des Schiebers in Pfeilrichtung A begrenzt ist. An dem außerhalb der hinteren Seitenwand befindlichen Ende besitzt jeder Schieber 34,35 einen senkrecht dazu vorspringende Steg 53,54. Zwischen der Nase 49 und der Nase 30 befindet sich in der Nähe der Nasen 49 eine Schwächung 55, so dass der Bereich 56, an dem der Steg 53 angeformt ist, um die Schwächung 55 verschwenkbar ist.

Mithilfe des erfindungsgemäß anzuwendenden zwei-Komponenten Spritzgiessens kann der Steg im Bereich der Schwächung 55 wiederum aus einem Material mit anderen mechanischen Eigenschaften hergestellt sein. Vorteilhafterweise wird in diesem Bereich ein Material mit hoher Festigkeit eingesetzt, so dass trotz der Schwächung eine stabile Verbindung gewährleistet ist.

Wenn der Schalter demontiert werden soll, wird mittels eines Schraubendrehers der Steg 53 entgegen dem Uhrzeigersinn um die Schwächung verschränkt; auf diese Weise kommt die Rastnase 52 frei von der Leiste 47, so dass der Schieber nach links in Pfeilrichtung A weiter verschoben werden kann, als bis zu der Stelle, an der die Rastnase 50 an der Leiste 47 anliegt. Damit der Leitungsschutzschalter auch dann aus dem Verbund herausgenommen werden kann, wenn die Anschlussklemmen mehrerer Leitungsschutzschalter mittels einer Sammelschiene mechanisch und elektrisch gekoppelt sind, kann der Bereich 56 durch weitere Verformung um die Schwächung 55 weiter in Pfeilrichtung A verschoben werden, wobei aufgrund der Schrägfläche 51 die Rastnase 49 hinter die Leiste 46 gleiten kann.

Das gleiche befindet sich auch am Schieber 35. Man erkennt dort die Leiste 46a und die Leiste 47a sowie die Rastnasen 49a und 50a.

Die Stege 42,43; 44, 45, die parallel zueinander angeordnet sind, verbleiben auch dann parallel, wenn die Schieber 34,35 aus der in der Figur gezeichneten Stellung in Pfeilrichtung A beziehungsweise B verschoben werden. In gewisser Weise schnappen die Stege 42,43;44,45 mit den Schiebern 430,35 aus der in der Figur gezeichneten Stellung in die Stellung um, in der die Schieber beziehungsweise die Nasen 30,31 von den freien Längskanten der Hutprofiltragschiene entfernt sind.

Die Erfindung ist an Hand eines Leitungsschutzschalters erläutert. Selbstverständlich kann sie an jedem Installationsgerät angewendet werden, das auf eine Hutprofiltragschiene aufgerastet werden soll. Sind in

## Patentansprüche

1. Elektrisches Schaltgerät mit einer Schnellbefestigungsvorrichtung zum Aufschnappen des Schaltgerätes auf eine Hutprofiltragschiene in einer Installationsver-teilung, wobei die Schnellbefestigungsvorrichtung wenigstens eine bewegliche Nase (30) umfasst, die mittels wenigstens eines einstückig an das Schaltgerätegehäuse angeformten Verbindungsteils (42, 43, 44, 45) der Befestigungsfläche (18) des Schaltgerätegehäuses zugeordnet ist und die im auf der Hutprofiltragschiene aufgeschnappten Zustand hinter eine Längskante der Hutprofiltragschiene greift, wobei das Verbindungs-teil federelastisch ist, **dadurch gekennzeichnet, dass** das Verbindungsteil aus einem Material besteht, das andere mechanischen Eigenschaften als das Gehäusematerial aufweist.

2. Elektrisches Schaltgerät nach Anspruch 1, wobei das Verbindungsteil ein federelastischer Steg ist, der aus einem Material besteht, das andere federelastische Eigenschaften aufweist als das Gehäusematerial, so dass unabhängig von den federelastischen Eigenschaften des Gehäusematerials eine federnde Verrastung des Schaltgerätes auf der Hutprofiltragschiene ermöglicht ist.

3. Elektrisches Schaltgerät nach einem der vorigen Ansprüche, wobei die bewegbare Nase (30, 31) an einem Schieber (34, 35) angeformt ist, welcher mittels des einstückig an das Schaltgerätegehäuse angeformten, wenigstens einen federelastischen Stegs (42, 43, 44, 45) geführt ist.

4. Elektrisches Schaltgerät nach einem der vorigen Ansprüche, wobei der Befestigungsfläche (18) zwei sich gegenüberliegende bewegbare Nasen (30, 31) mittels einstückig an das Schaltgerätegehäuse angeformter, federeleastischer Stege (42, 43, 44, 45) zugeordnet sind.

5. Elektrisches Schaltgerät nach Anspruch 4, wobei die bewegbaren Nasen (30, 31) an je einem Schieber (34, 35) angeformt sind, weiche mittels der einstückig an das Schaltgerätegehäuse angeformten, federelastischen Stege (42, 43, 44, 45) geführt sind.

6. Elektrisches Schaltgerät nach einem der vorigen Ansprüche, wobei im aufgerasteten Zustand die Stege (42, 43, 44, 45) mit der Befestigungsfläche (18, 38, 39) einen spitzen Winkel einnehmen, der zur gegenüberliegenden Nase (31, 30) geöffnet ist.

7. Elektrisches Schaltgerät nach einem der vorigen Ansprüche, wobei an der Befestigungsfläche (18) im Bereich der hinteren Seitenflächen zwei senkrecht zur Befestigungsfläche vorspringende Leisten (46, 47, 46a, 47a) angeformt sind, die mit an den Schiebern (34, 35) angeformten Rastnasen (49, 50, 49a, 50a) zusammenwirken.

8. Elektrisches Schaltgerät nach einem der vorigen Ansprüche, wobei zwischen der bewegbaren Nase (30, 31) und dem nach außen ragenden Ende jedes Schiebers (34, 35) eine Schwächung (55, 55a) vorgesehen ist, um die das Ende jedes Schiebers (34, 35) zur Demontage schwenkbar ist.

9. Elektrisches Schaltgerät nach einem der vorigen Ansprüche, wobei das Schaltgerätegehäuse und die Befestigungsvorrichtung, einstückig verbunden sind.

10. Elektrisches Schaltgerät nach einem der vorigen Ansprüche, wobei das Schaltgerätegehäuse und die Schnellbefestigungsvorrichtung in einem Zweikomponenten- Spritzgußverfahren hergestellt sind.

## Claims

1. Electrical switching device with a quick-action fastening apparatus for snapping the switching device onto a top-hat mounting rail in a service distribution panel, the quick-action fastening apparatus comprising at least one movable tab (30), which is associated with the fastening face (18) of the switching device housing by means of at least one connecting part (42, 43, 44, 45), which is integrally formed in one piece with the switching device housing, and in the state in which it is snapped onto the top-hat mounting rail, engages behind a longitudinal edge of the top-hat mounting rail, the connecting part being spring-elastic, **characterized in that** the connecting part is made from a material which has different mechanical properties than the housing material.

2. Electrical switching device according to Claim 1, the connecting part being a spring-elastic web, which is made from a material which has different spring-elastic properties than the housing material, with the result that sprung latching of the switching device on the top-hat mounting rail is made possible independently of the spring-elastic properties of the housing material.

3. Electrical switching device according to one of the preceding claims, the movable tab (30, 31) being integrally formed on a slide (34, 35), which is guided by means of the at least one spring-elastic web (42, 43, 44, 45), which is integrally formed in one piece with the switching device housing.

4. Electrical switching device according to one of the preceding claims, two mutually opposite movable tabs (30, 31) being associated with the fastening face (18) by means of spring-elastic webs (42, 43, 44, 45), which are integrally formed in one piece with the switching device housing.

5. Electrical switching device according to Claim 4, the movable tabs (30, 31) being integrally formed on in each case one slide (34, 35), which slides are guided by means of the spring-elastic webs (42, 43, 44, 45), which are integrally formed in one piece with the switching device housing.

6. Electrical switching device according to one of the preceding claims, in the latched-on state the webs (42, 43, 44, 45) with the fastening face (18, 38, 39) assuming an acute angle, which is open toward the opposite tab (31, 30).

7. Electrical switching device according to one of the preceding claims, two strips (46, 47, 46a, 47a), which protrude at right angles with respect to the fastening face and interact with latching tabs (49, 50, 49a, 50a), which are integrally formed on the slides (34, 35), are integrally formed on the fastening face (18) in the region of the rear side faces.

8. Electrical switching device according to one of the preceding claims, a weakened portion (55, 55a) being provided between the movable tab (30, 31) and that end of each slide (34, 35) which protrudes outward, about which weakened portion the end of each slide (34, 35) can be pivoted for dismantling purposes.

9. Electrical switching device according to one of the preceding claims, the switching device housing and the fastening apparatus being connected in one piece.

10. Electrical switching device according to one of the preceding claims, the switching device housing and the quick-action fastening apparatus being produced in a two-component injection-moulding process.

## Revendications

1. Commutateur électrique comprenant un dispositif de fixation rapide pour l'encliquetage du commutateur sur un rail de support à profil en chapeau dans un équipement de distribution, le dispositif de fixation rapide comprenant au moins un ergot mobile (30) qui est associé, au moyen d'au moins une pièce de connexion (42, 43, 44, 45) façonnée d'une seule pièce sur le boîtier de commutateur, à la surface de fixation (18) du boîtier de commutateur et qui vient en prise dans l'état encliqueté sur le rail de support à profil en chapeau derrière une arête longitudinale du rail de support à profil en chapeau, la pièce de connexion étant élastique à ressort, **caractérisé en ce que** la pièce de connexion se compose d'un matériau qui présente des propriétés mécaniques différentes du matériau du boîtier.

2. Commutateur électrique selon la revendication 1, dans lequel la pièce de connexion est une nervure élastique à ressort, qui se compose d'un matériau qui présente des propriétés élastiques à ressort différentes du matériau du boîtier, de sorte qu'indépendamment des propriétés élastiques à ressort du matériau du boîtier, un encliquetage élastique du commutateur sur le rail de support à profil en chapeau soit possible.

3. Commutateur électrique selon l'une quelconque des revendications précédentes, dans lequel l'ergot mobile (30, 31) est façonné sur un coulisseau (34, 35) qui est guidé au moyen de l'au moins une nervure élastique à ressort (42, 43, 44, 45) façonnée d'une seule pièce sur le boîtier de commutateur.

4. Commutateur électrique selon l'une quelconque des revendications précédentes, dans lequel la surface de fixation (18) est associée à deux ergots mobiles opposés (30, 31) au moyen de nervures (42, 43, 44, 45) élastiques à ressort façonnées d'une seule pièce sur le boîtier de commutateur.

5. Commutateur électrique selon la revendication 4, dans lequel les ergots mobiles (30, 31) sont façonnés sur un coulisseau respectif (34, 35), lesquels coulisseaux sont guidés au moyen des nervures élastiques à ressort (42, 43, 44, 45) façonnées d'une seule pièce sur le boîtier de commutateur.

6. Commutateur électrique selon l'une quelconque des revendications précédentes, dans lequel, dans l'état encliqueté, les nervures (42, 43, 44, 45) forment avec la surface de fixation (18, 38, 39) un angle aigu qui est ouvert vers l'ergot opposé (31, 30).

7. Commutateur électrique selon l'une quelconque des revendications précédentes, dans lequel, sur la surface de fixation (18) dans la région des faces latérales arrière, sont façonnées deux pattes (46, 47, 46a, 47a) saillant perpendiculairement à la surface de fixation, lesquelles coopèrent avec des ergots d'encliquetage (49, 50, 49a, 50a) façonnés sur les coulisseaux (34, 35).

8. Commutateur électrique selon l'une quelconque des revendications précédentes, dans lequel, entre les ergots mobiles (30, 31) et l'extrémité saillant vers l'extérieur de chaque coulisseau (34, 35), est prévu un affaiblissement (55, 55a), autour duquel l'extrémité de chaque coulisseau (34, 35) peut pivoter en vue du démontage.

9. Commutateur électrique selon l'une quelconque des revendications précédentes, dans lequel le boîtier de commutateur et le dispositif de fixation sont connectés d'une seule pièce.

10. Commutateur électrique selon l'une quelconque des revendications précédentes, dans lequel le boîtier de commutateur et le dispositif de fixation rapide sont fabriqués suivant un procédé de moulage par injection à deux composants.
